Europäisches Patentamt

European Patent Office

Office européen des brevets

(11) Numéro de publication: **0 424 273 A1**

# (12) DEMANDE DE BREVET EUROPEEN

(21) Numéro de dépôt: **90402951.9**

(22) Date de dépôt: **19.10.90**

(51) Int. Cl.5: **H04M 11/02**

(30) Priorité: **20.10.89 FR 8913782**

(43) Date de publication de la demande:
**24.04.91 Bulletin 91/17**

(84) Etats contractants désignés:
**AT BE CH DE DK ES FR GB GR IT LI LU NL SE**

(71) Demandeur: **Zanouda, Kaddour**
**14, rue de Franche Comté**
**F-25000 Besancon(FR)**

(72) Inventeur: **Zanouda, Kaddour**
**14, rue de Franche Comté**
**F-25000 Besancon(FR)**

(74) Mandataire: **Bruder, Michel et al**
**Cabinet Michel Bruder Conseil en Brevets**
**10, rue de la Pépinière**
**F-75008 Paris(FR)**

(54) **Procédé de maintenance d'un dispositif de contrôle des accès à un bâtiment, et dispositif de contrôle le mettant en oeuvre.**

(57) Le procédé est caractérisé en ce qu'on enregistre en permanence l'état de tous les périphériques reliés directement ou indirectement au microprocesseur qui équipe ledit dispositif de contrôle des accés au bâtiment, de manière à mettre à jour simultanément un tableau à double entrée indiquant l'état de chacun desdits périphériques, ce tableau étant stocké dans une mémoire sauvegardée reliée audit microprocesseur. l'invention concerne également un dispositif de contrôle des accès du type mentionné.

Le domaine de l'invention est plus particulièrement celui de la sécurité des bâtiments, et notamment des immeubles d'habitation ou des bureaux.

FIGURE 1

La présente invention concerne un procédé de maintenance d'un dispositif de contrôle des accès à un bâtiment, du type d'un portier de rue électronique, et un dispositif de contrôle le mettant en oeuvre.

De nombreux bâtiments, par exemple des immeubles d'habitation, sont équipés d'interphones qui permettent à un visiteur se présentant à l'entrée d'un immeuble d'entrer en communication avec l'un de ses occupants. A cet égard, il a été développé de véritables portiers de rue électroniques, les plus sophistiqués pouvant présenter un véritable système de messagerie. De telles réalisations sont proposées dans le brevet européen EP-198 411, dans le brevet européen EP-208 959 et dans le brevet français FR-2 620 286. Par exemple, le portier de rue décrit dans ce dernier document est équipé d'un afficheur et d'un clavier alphanumérique extérieurs permettant à un visiteur de taper le nom de la personne demandée dans l'immeuble ; un programme informatique, enregistré dans une unité centrale comportant au moins un microprocesseur, se charge de comparer ce nom aux noms des occupants de l'immeuble, stockés sous forme codée dans une mémoire destinée à cet usage. En cas de coincidence du nom tapé avec un nom stocké, le microprocesseur envoie un signal d'appel vers un dispositif de communication situé à l'intérieur de l'appartement appelé, et, si personne ne répond, le visiteur a la possibilité de laisser un message que pourra consulter le locataire de l'appartement à son retour. Un portier de rue électronique de structure semblable est proposé dans le brevet européen EP-208 959 déjà mentionné, les signaux bidirectionnels échangés entre l'unité centrale et les appartements transitant alors, non par le canal classique des câbles d'interphone, mais par le câble coaxial de l'antenne de télévision qui équipe généralement l'immeuble.

Bien qu'ils soient d'un apport incontestable dans le domaine de l'interphonie, les deux portiers précédents présentent des inconvénients, notamment en ce qui concerne leur maintenance. En effet, les recherches de panne, sur ces portiers complexes, sont longues car souvent, l'installation ne permet pas de trouver rapidement les défauts responsables de ces pannes, qu'il s'agisse de courts-circuits, de ruptures de câbles, ou d'un disfonctionnement du portier de rue ou des dispositifs de communication aménagés dans les appartements. A cet égard, le diagnostic de l'installation est rendu particulièrement difficile par le fait que certaines mesures peuvent seulement être faites de manière centralisée au niveau du portier ; par exemple, la rupture ou le court-circuit d'un câble, à un endroit quelconque de son trajet, peut être détectée par la mesure de la variation d'impédance globale de son circuit au niveau du portier, variation d'autant plus malaisée à mesurer qu'elle dépend directement du nombre d'appartements gérés par l'unité centrale, du type d'interphones, et d'autres paramètres dont les effets propres sont difficiles à maîtriser par une mesure globale.

Par ailleurs, en cas de panne, l'installation complète doit être mise hors-service, ce qui est un inconvénient majeur relativement à la sécurité des appartements que l'on désire garantir contre des accès abusifs ou inamicaux.

La présente invention vise à remédier à ces inconvénients en procurant un système de portier de rue électronique fiable, dont la maintenance soit rapide et interactive.

L'invention concerne ainsi un procédé de maintenance d'un dispositif de contrôle des accès à un bâtiment, tel que par exemple un dispositif du type d'un portier de rue électronique équipé d'un microprocesseur gérant notamment une mémoire où sont stockés les noms des occupants dudit bâtiment, d'un afficheur et d'un clavier alphanumérique permettant à un visiteur de taper le nom de la personne demandée, ce nom étant comparé auxdits noms stockés, afin qu'en cas de coincidence du nom tapé et d'un nom stocké, un signal d'appel soit émis en direction d'un dispositif de communication situé à l'intérieur de l'appartement de la personne demandée, ce procédé étant caractérisé en ce qu'on enregistre en permanence l'état de tous les périphériques reliés directement ou indirectement audit microprocesseur, de manière à mettre à jour, simultanément, un tableau à double entrée indiquant l'état de chacun desdits périphériques, ce tableau étant lui-même stocké dans une mémoire sauvegardée également reliée audit microprocesseur.

Selon une autre caractéristique de l'invention, l'état d'un périphérique peut indifféremment être de nature logique ou de nature analogique. Quand cet état est de nature logique, il est avantageux, conformément à la variante préférée de l'invention, d'utiliser cet état logique comme un indicateur de bon fonctionnement du périphérique ou de son disfonctionnement ; le tableau à double entrée des états des périphériques constitue alors une véritable table des défauts qu'il est aisé de consulter lors de la maintenance de l'installation.

Par ailleurs, l'état d'un périphérique peut indiquer, le cas échéant, la nature de la panne affectant ce dernier. Pour cela, des circuits de mesure, normalement analogiques, sont prévus à proximité des périphériques à surveiller, les niveaux des mesures ainsi effectuées étant comparés à un ensemble de valeurs de consignes ajustables en fonction de paramètres propres à ces périphériques ; les résultats de ces comparaisons sont susceptibles d'indiquer l'existence d'une panne, sa nature et/ou sa gravité. Par exemple, l'intensité du courant circulant sur une ligne téléphonique reliée au combiné téléphonique d'un interphone indique si ce combiné est décroché, ou raccroché, si son haut-parleur est défectueux, ou encore si le bouton ouvreporte qui peut y être incorporé est resté bloqué, etc ...

Suivant enfin une autre caractéristique du procédé conforme à l'invention, seule la partie de l'installation affectée par une panne est mise horsservice, le reste continuant de fonctionner sans perturbation. La sécurité de l'immeuble n'est ainsi pas mise en cause dans son ensemble.

Par exemple, en cas de disfonctionnement du combiné téléphonique d'un appartement, l'état logique de ce combiné, enregistré dans la table des défauts, indique la panne sans qu'il soit nécessaire de procéder à la vérification complète de toute l'installation. De même, lorsque les combinés téléphoniques d'un même étage sont reliés à un circuit de dérivation commun, une panne de ce dernier provoquera la mise hors-service de tout l'étage, et seul l'état logique du circuit de dérivation indiquera la panne. On comprend donc bien que, de cette façon, une panne affectant l'un des périphériques de l'installation peut être détectée exactement par simple consultation de la table des défauts. La remise en état peut donc s'effectuer rapidement et de manière sûre.

Un tel procédé de maintenance peut apparaître comme étant banal à un spécialiste du domaine de la télésurveillance, pour lequel il est évident de prélever à distance des mesures indiquant le bon fonctionnement ou le disfonctionnement des organes constitutifs d'une installation lointaine, ces mesures pouvant être stockées dans une mémoire pour être consultées, ou pouvant être affichées en permanence à l'aide d'indicateurs lumineux ; un exemple d'une telle réalisation est fourni dans le brevet allemand DE-3 643 618 au nom de la Société SIEMENS AG. L'adoption d'une telle solution au domaine de l'interphonie pose néanmoins des problèmes loin d'être évidents pour l'homme de métier ; en particulier, les installations d'interphonie actuelles n'utilisent que des techniques analogiques rudimentaires, et rien n'est prévu, en particulier, pour s'assurer de l'intégrité des câbles, c'est-à-dire mesurer leur impédance, ou pour vérifier localement qu'un interphone d'appartement fonctionne ou est bien raccroché, et ce même dans les portiers électroniques les plus sophistiqués déjà mentionnés. Il n'est pas non plus évident que la modification des installations existantes, en vue d'incorporer les facilités de maintenance procurées par la présente invention, soit toujours possible. Or, cette dernière possibilité est une condition économique essentielle pour l'acceptation, par le possesseur d'un sytème d'interphonie, du procédé conforme à l'invention, ce qui rend l'homme de métier particulièrement prudent lorsqu'il envisage de modifier une installation existante ; à cet égard, l'emploi de techniques numériques est particulièrement inhabituel dans le domaine de l'interphonie, où les signaux analogiques manipulés se comportent d'une manière très différente des signaux logiques utilisés en microélectronique.

D'autres carctéristiques et avantages du procédé de maintenance objet de la présente invention ressortiront mieux de la description qui va suivre d'un mode de réalisation donné à titre d,exemple non limitatif d'un dispositif de contrôle des accés à un bâtiment mettant en oeuvre ledit procédé, en référence aux dessins annexés sur lesquels :

- la figure 1 est un schéma synoptique d'un dispositif de contrôle des accés à un bâtiment conforme à la présente invention,
- la figure 2 est un schéma synoptique du poste de rue équipant le dispositif de contrôle des accès à un bâtiment représenté sur la figure 1,
- la figure 3 est un schéma synoptique de l'unité centrale équipant le dispositif de contrôle des accès à un bâtiment représenté sur la figure 1,
- la figure 4 est un schéma synoptique d'un multiplexeur équipant le dispositif de contrôle des accès à un bâtiment représenté sur la figure 1.

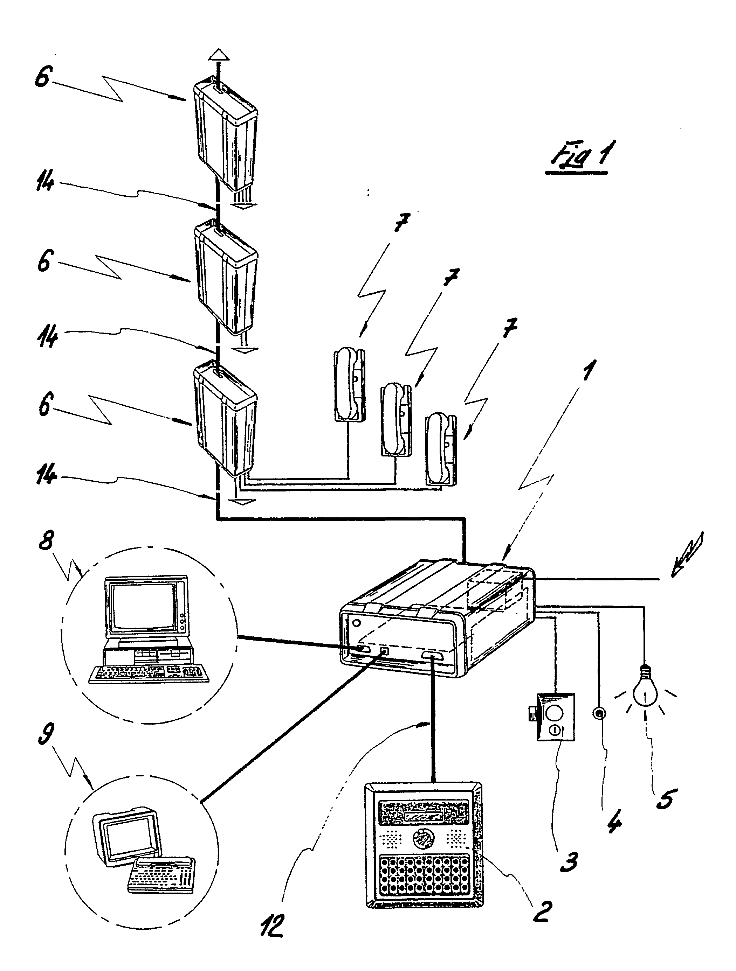

Conformément à la figure 1, un dispositif de contrôle des accès à un bâtiment, ou portier, mettant en oeuvre le procédé de contrôle conforme à la présente invention comporte une unité centrale 1 recevant principalement ses ordres de commande d'un poste de rue 2 et émettant des signaux en direction d'un ensemble de dispositifs annexes, appelés par la suite périphériques, à savoir :

- un périphérique d'ouverture de porte, tel une gâche 3 à commande électrique,
- un périphérique d'actionnement direct de la gâche 3, tel un bouton poussoir 4, la liaison entre ce bouton poussoir 4 et la gâche 3 s'effectuant exclusivement sous le contrôle de l'unité centrale 1,
- un périphérique de commande 5 de l'éclairage à l'intérieur des parties communes du bâtiment,
- un ensemble de périphériques, ou circuits de dérivation 6, orientant les signaux émis par l'unité centrale 1 vers les dispositifs de communication 7 situés dans des appartements du bâtiment.

Par ailleurs, l'unité centrale 1 peut échanger des informations avec un ordinateur 8 amovible, du type d'un microordinateur personnel, servant à la maintenance locale du portier. l'unité centrale 1 peut également être reliée à un centre serveur informatique 9 ; en cas de panne, un technicien chargé de la maintenance dresse alors son diagnostic à distance en interrogeant l'unité centrale 1 par l'intermédiaire du centre serveur informatique 9. Ce diagnostic étant établi, ce technicien peut se déplacer avec les outils, et le cas échéant les pièces, nécessaires à la réparation, sans se charger d'outils superflus et/ou sans devoir effectuer de nombreuses démarches pour se procurer une pièce manquante. Une fois sur place, le technicien procède rapidement à la réparation puisque la panne est déjà localisée. Puis, afin de s'assurer du bon fonctionnement de l'installation, il connecte un microordinateur 8 à l'unité centrale 1 et établit un nouveau diagnostic ; en cas d'anomalie, il peut alors immédiatement compléter son intervention.

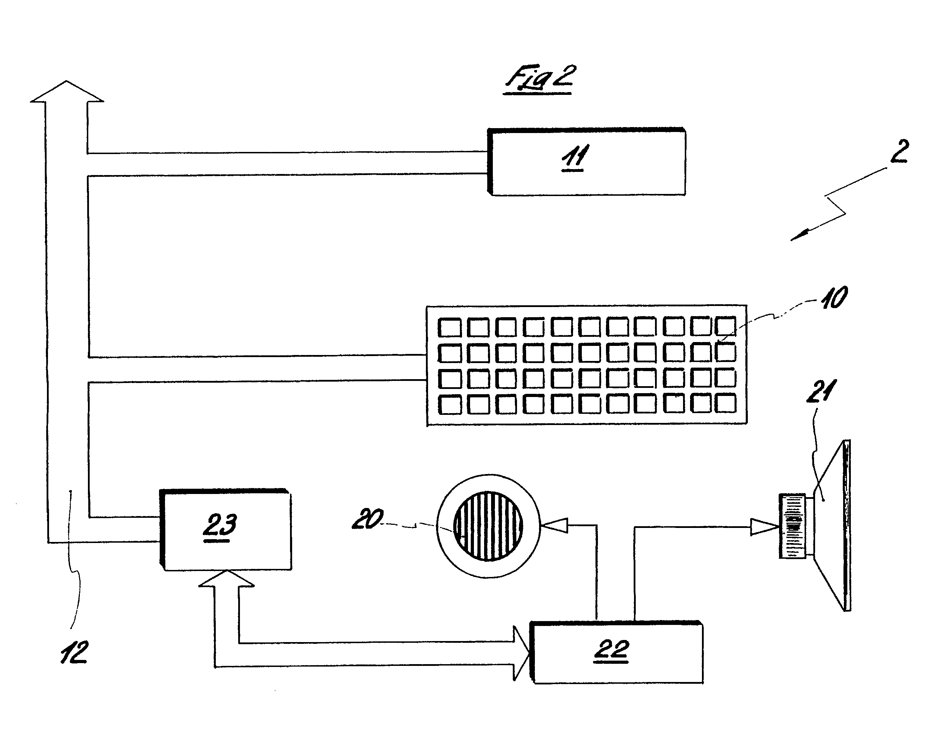

On décrira maintenant, en référence aux figures 2, 3 et 4, les conditions normales d'utilisation du portier de rue précédemment décrit, en explicitant notamment à chaque étape la nature et le support des signaux qui sont échangés entre l'unité centrale 1 et les parties composantes de l'installation.

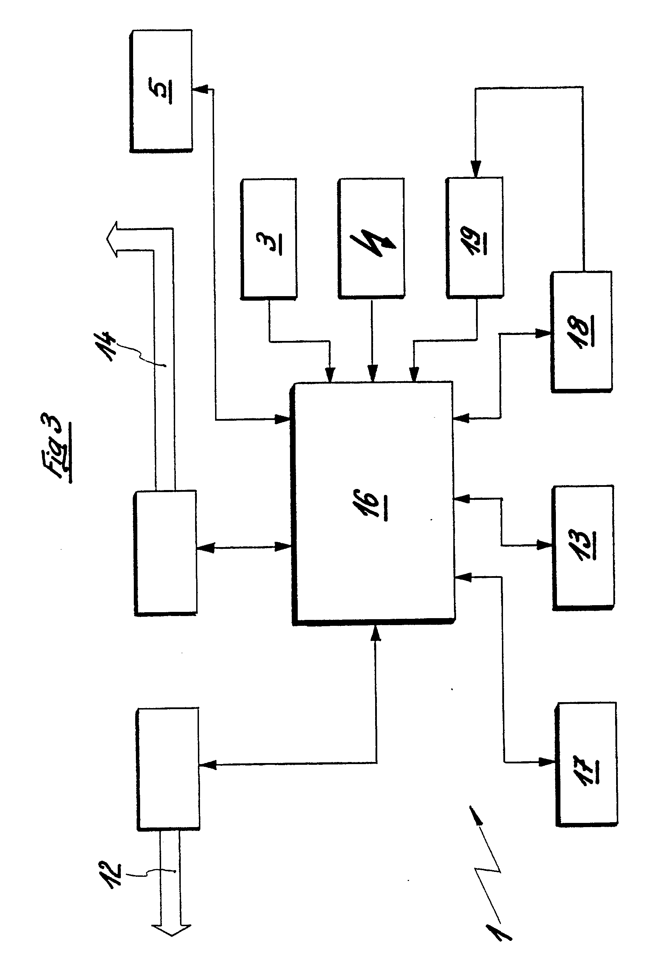

Lorsqu'un visiteur se présente à l'entrée du bâtiment équipé du portier, il se retrouve en face du poste de rue 2. Ce dernier constitue une interface de communication entre ce visiteur et l'unité centrale 1 du portier ; afin de réaliser sa fonction d'interface, le poste de rue 2 est muni d'un clavier alphanumérique 10 (fig.2) qui permet au visiteur de taper le nom de la personne qu'il désire rencontrer. Les caractères alphanumériques tapés par le visiteur apparaissent sur un afficheur 11 (fig.2) et sont traités simultanément par l'unité centrale 1 ; les communications entre le poste de rue 2 et l'unité centrale 1, ainsi que les communications entre les parties composantes du poste de rue 2 sont supportées par un bus de liaison unique 12 (fig.1, 2, 3) aux normes informatiques. Le traitement du nom tapé par le visiteur sur le clavier alphanumérique 11 est très simple et consiste à comparer ce nom à un ensemble de noms stockés dans une mémoire sauvegardée 13 (fig.3) de l'unité centrale 1 (on entend par mémoire sauvegardée toute mémoire informatique dont l'alimentation est autonome, au moins pendant un temps supérieur celui résultant d'un défaut d'alimentation générale du portier ou de la maintenance) ; en cas de coincidence entre le nom tapé et un des noms stockés dans la mémoire sauvegardée 13, l'unité centrale 1 émet un signal d'appel en direction de l'appartement habité par la personne dont le nom coincide avec celui tapé par le visiteur.

Ce signal transite, par l'intermédiaire d'un bus informatique unique 14 (fig.1, 3, 4) vers les circuits de dérivation 6 (fig.1), placés par exemple à chaque étage du batiment, et assurant la dérivation des signaux émis par l'unité centrale 1 en direction des appartements. Le signal d'appel est ainsi dirigé vers le dispositif de communication 7 de l'appartement concerné, où il déclenche, par exemple, une sonnerie.

Selon une caractéristique particulièrement avantageuse de la présente invention, les circuits de dérivation 6 sont des multiplexeurs informatiques 15, l'installation du portier étant elle-même organisée en réseau ; de cette manière, à chaque noeud et à chaque branche de ce réseau, c'est-à-dire à chaque périphérique relié directement ou indirectement à l'unité centrale 1, correspond une adresse informatique définie de manière conventionnelle. Par exemple, cette adresse informatique peut être formée par un mot de huit éléments binaires, dénommé conventionnellement octet ; dans cette configuration, il peut alors exister 256 adresses différentes, ce qui signifie qu'on peut équiper le portier d'un nombre identique de périphériques (on peut donc équiper au maximum 256 appartements). Un tel adressage informatique procure une grande sûreté dans l'acheminement des signaux émis par l'unité centrale 1 en direction des périphériques, et réciproquement. Ainsi, à un périphérique correspond une adresse et un état, généralement logique, le stockage de cet état pouvant facilement s'effectuer dans une mémoire numérique conventionnelle, telle que, avantageusement, la mémoire sauvegardée 13.

Les relations entre l'unité centrale et 1 ses périphériques sont organisées, conformément à la figure 3, par un microprocesseur 16 qui peut être, dans la variante d'éxécution du portier proposée précédemment, un microprocesseur à 8 bits (c,est-à-dire pouvant gérer des adresses codées par octets). Une horloge 17, cadencée par un quartz, assure la synchronisation des taches effectuées par le microprocesseur 16 et procure une base de temps permettant d,établir une chronologie d'au moins certains des événements affectant le fonctionnement du portier. De manière générale, un programme informatique, stocké dans une mémoire 18, se déroule de manière permanente de manière à contrôler par l'intermédiaire de circuits appropriés 19 le fonctionnement du microprocesseur 16.

On a donc vu comment le signal d'appel, émis par l'unité centrale 1 suite à la demande du visiteur se trouvant à la porte du bâtiment, est acheminé de façon sûre vers l'appartement habité par la personne dont le nom coincide avec le nom tapé par ce visiteur sur le clavier alphanumérique 10 du poste de rue 2. Ce signal d'appel déclenche alors, on l'a vu, une sonnerie dans l'appartement. Ceci est le cas normal où l'unité centrale 1 n'a détecté aucun défaut sur le trajet existant entre elle-même et le dispositif de communication 7 placé dans cet appartement ; le terme "défaut" doit être compris ici dans un sens très large et ne signifie pas nécessairement "panne" - en effet, le combiné téléphonique équipant le dispositif de communication 7 peut simplement être resté décroché -.

Le cas échéant, en cas de défaut, aucune sonnerie n'est émise dans l'appartement et l'unité centrale 1, détectant ce défaut, émet alors un message vers l'afficheur 11 du poste de rue 2 (message transitant par le bus informatique de liaison 12) à destination du visiteur. Dans le même temps, l'unité centrale 1 provoque la mise à jour de la table des défauts, (ou plus généralement du tableau des états des périphériques reliés au microprocesseur 16 de l'unité centrale 1) qui est stockée, par exemple, dans la mémoire sauvegardée 13. On notera que, lors d'une visite, la consultation préalable de la table des défauts permet à l'unité centrale 1 d'éviter toute émission superflue d'un signal d'appel vers un périphérique en dérangement.

Dans le cas où tout fonctionne correctement, et si la personne demandée par le visiteur répond au signal d'appel, une communication téléphonique est établie entre le poste de rue 2 et le dispositif de communication 7 situé dans l'appartement. A cet effet, conformément à la figure 2, le poste de rue 2 est équipé d'un microphone 20 et d'un haut-parleur 21 reliés à un circuit d'amplification 22 lui-même connecté de manière bidirectionnelle à un circuit de mise en forme 23 des signaux acoustiques ; cette mise en forme est nécessaire en ce qu'elle permet de traduire sous forme numérique les signaux analogiques émis par le microphone 20 ou de traduire sous forme analogique les signaux numériques destinés au haut-parleur 21.

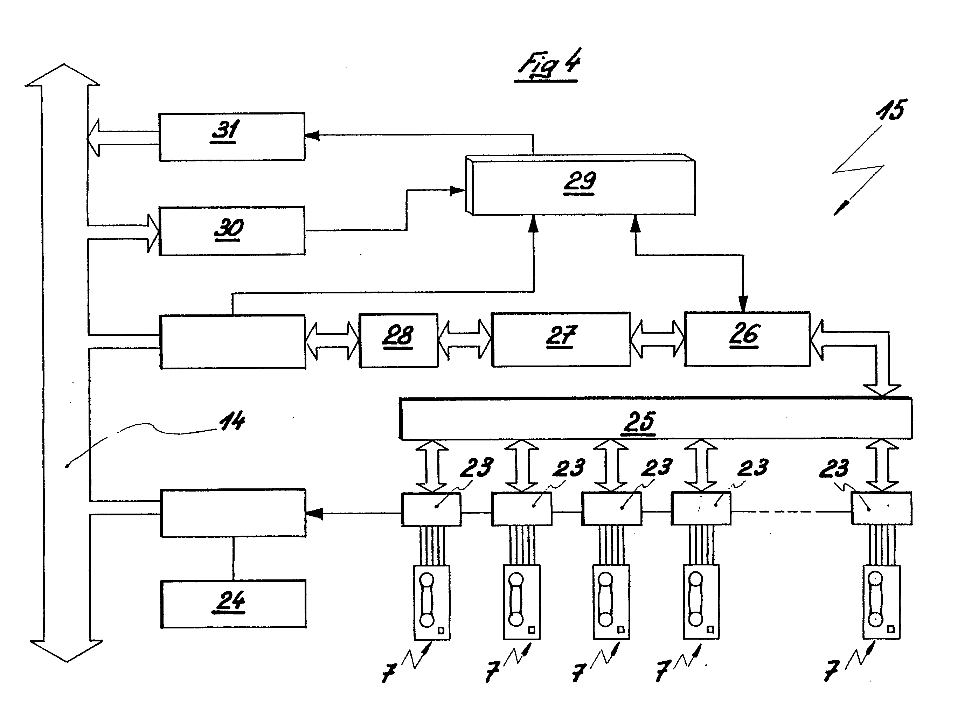

Conformément à la figure 4, les dispositifs de communication 7 peuvent être réalisés de manière conventionnelle et, par exemple, on peut employer les installations d'interphonie à 5 fils existantes - ces 5 fils sont respectivement : un fil de masse, un fil d'alimentation électrique, un fil de déclenchement de la gâche, un fil de transit du son émis vers le haut-parleur du combiné téléphonique, et un fil de transit du son reçu par le microphone dudit combiné -. Les dispositifs de communication 7 sont protégés contre toute surtension par des boitiers de protection conventionnels 23 disposés en série sur les 5 fils ; ces boitiers peuvent servir par ailleurs à alimenter directement les dispositifs de communication 7 au moyen d'une alimentation électrique 24 incorporée à chaque multiplexeur 15.

Les 3 fils de transit des signaux (son du haut-parleur, son du microphone, et signal de commande de la gâche 3) et le fil de masse sont, pour leur part, connectés à un circuit 25 d'aiguillage des signaux, lui-même relié à un circuit 26 de détection des défauts pouvant affectés les dispositifs de communication 7. Ce dernier circuit 26 permet, par exemple, de mesurer l'intensité du courant circulant entre le fil de masse et l'un des fils de transit, et ce à proximité desdits dispositifs de communication 7, ce qui permet de détecter sûrement toute surintensité, ou toute rupture de fil. Cette même détection est très difficile sur les portiers traditionnels, car les fils d'interphone 7 de chaque appartement sont reliés par simple dérivation à un ensemble de fils communs sur lesquels la mesure est centralisée.

Les signaux circulant sur les fils de transit sont de nature analogique, et après leur amplification par un circuit approprié 27, ils sont transformés par le circuit 28 en des signaux logiques pouvant transiter, de manière sûre, par l'intermédiaire d'un bus informatique jusqu'à un microprocesseur 29 équipant chaque multiplexeur 15. Ce microprocesseur 29 dialogue en permanence avec le microprocesseur 16 de l'unité centrale par l'intermédiaire du bus informatique de liaison 14. Par ailleurs, un circuit de lecture d'adressage 30 assure le bon adressage des signaux provenant de l'unité centrale 1 et qui sont destinés aux dispositifs de communication 7 ; de même, un circuit d'interface 31 contrôle l'émission des messages émis par le microprocesseur 29 vers l'unité centrale 1.

On a donc vu comment se déroule la communication téléphonique qui a été établie entre le poste de rue 2 et le dispositif de communication 7 situé dans l'appartement concerné au moment de la réponse de l'occupant de cet appartement au signal d'appel envoyé par le visiteur depuis ledit poste de rue 2. Suivant une caractéristique complémentaire de l'invention, les signaux de son - c'est-à-dire transitant entre le microphone 20 du poste de rue 2 et le haut-parleur du combiné téléphonique du dispositif de communication 7 d'une part, et entre le microphone du combiné téléphonique du dispositif de communication 7 et le haut-parleur 21 du poste de rue 2 d'autre part -, sont dissociés en deux demi-signaux complémentaires, référencés par rapport au fil de masse, et synchronisés temporellement de manière à éliminer les signaux parasites pouvant affectés l'intelligibilité desdits signaux de son ; en effet, ces signaux parasites (dont l'origine peut être, par exemple, le déclenchement des lumières de l'immeuble, de l'ascenseur, etc) ont une nature aléatoire et se superposent de manière identique aux signaux transitant sur tous les fils de liaison ; la dissociation des signaux de son en deux demi-signaux complémentaires, connue par ailleurs en soi, permet d'éliminer totalement ces signaux parasites. Ainsi dissociée, la communication établie entre le poste de rue 2 et le dispositif de communication 7 situé dans un appartement est parfaitement intelligible, ce qui est peu courant sur les installations de portier jusqu'alors connues et mises en service.

Suivant les termes de la communication entre le visiteur et la personne demandée par celui-ci grâce au portier objet de la présente invention, cette personne introduit ou pas le visiteur ; dans le premier cas, il lui suffit d'appuyer sur le bouton ouvre-porte (non représenté sur les figures) incorporé au dispositif de communication 7 installé dans son appartement et un signal de commande est alors envoyé vers le multiplexeur 15 qui gère, par exemple à l'étage, ledit dispositif 7. Ce multiplexeur 15 envoie ce même signal au microprocesseur 16 de l'unité centrale 1 par l'intermédiaire du bus informatique 14 ; le microprocesseur 16 traite ce signal de commande en envoyant un signal vers le circuit de commande 5 de la lumière et un signal vers le circuit de commande de la gâche 3. La porte s'ouvre en même temps que la lumière s'allume, et le visiteur peut alors se diriger vers l'appartement de la personne qui lui a ouvert.

Un dernier cas non encore envisagé est possible. La personne demandée par le visiteur est absente ; une sonnerie se déclenche effectivement dans l'appartement et, après une durée de temporisation ajustable, le portier considère que l'appartement est vide. Il est alors proposé au visiteur un service de messagerie lui permettant de laisser un message à la personne absente. Cette procédure est contrôlée par le microprocesseur 16 de l'unité centrale 1 qui se charge notamment de stocker ce message, par exemple dans la mémoire sauvegardée 13. A son retour, l'unité centrale 1 indique à l'occupant de l'appartement qu'un message a été laissé à son intention. Cette procédure, déjà décrite dans les brevets européen et français précédemment mentionnés, est donc parfaitement maîtrisée et connue.

De même, pour pénétrer dans son immeuble, un occupant se présentant à l'entrée doit se faire identifier par le portier, c'est-à-dire par l'unité centrale 1. Il tape alors un mot de passe sur le clavier alphanumérique 10 du poste de rue 2 ; ce mot de passe transite sous forme codée jusqu'au microprocesseur 16 de l'unité centrale 1 où le programme stocké dans la mémoire 18 le compare à une liste de mots de passe préenregistrés dans la mémoire sauvegardée 13. En cas de coincidence du mot de passe tapé et d'un mot de passe enregistré, l'unité centrale 1 envoie un signal d'ouverture de la gâche 3 et un signal en direction de la commande de lumière 5. Eventuellement, si au moins un message a été laissé à l'intention de la personne dont le mot de passe vient d'être tapé sur le clavier alphanumérique 10, l'unité centrale 1, en même temps qu'elle provoque l'ouverture de la porte, propose à cette personne la consultation de ses messages ; après consultation, ces messages sont généralement effacés de la mémoire sauvegardée 13, ceci pour des raisons évidentes de taille mémoire disponible. On notera qu'un message non consulté pendant un laps de temps suffisamment grand pourra être effacé de la mémoire sauvegardée 13 à l'initiative de l'unité centrale 1.

Il existe de même un ensemble d'autres mots de passe, organisés hierarchiquement de manière à permettre respectivement, soit l'accès simple à l'immeuble et la consultation de messages, soit la gestion de cas particuliers tels celui du contrôle des accès aux locaux professionnels situés dans l'immeuble, soit la maintenance sur place - par l'intermédiaire directe du clavier alphanumérique 10 et de l'afficheur 11, ou par l'intermédiaire d'un microordinateur 8 connecté à l'unité centrale 1 -, soit la maintenance à distance par l'intermédiaire du centre serveur informatique 9.

Il est bien entendu que ni le procédé de maintenance, ni les formes d'éxécution des portiers décrites précédemment ou représentées sur les figures annexées ne sont limitatives. Toute variante non citée mettant en oeuvre des éléments techniques équivalents dans le même esprit que celui de l'invention ne sortirait pas du cadre de celle-ci.

Le domaine de l'invention est plus particulièrement celui de la sécurité des bâtiments, et notamment des immeubles d'habitation ou des bureaux.

## Revendications

1 - Procédé de maintenance d'un dispositif de contrôle des accès à un bâtiment, tel que par exemple un dispositif du type d'un portier de rue électronique équipé d'un microprocesseur gérant notamment une mémoire où sont stockés les noms des occupants dudit bâtiment, d'un afficheur et d'un clavier alphanumérique permettant à un visiteur de taper le nom de la personne demandée, ce nom étant comparé auxdits noms stockés, afin qu'en cas de coincidence du nom tapé et d'un nom stocké, un signal soit émis en direction d'un dispositif de communication situé à l'intérieur de l'appartement de ladite personne demandée, ce procédé de maintenance étant caractérisé en ce qu'on enregistre en permanence l'état de tous les périphériques reliés directement ou indirectement au microprocesseur qui équipe ledit dispositif, de manière à mettre à jour simultanément un tableau à double entrée indiquant l'état de chacun desdits périphériques, ce tableau étant lui-même stocké dans une mémoire sauvegardée reliée audit microprocesseur.

2 - Procédé de maintenance suivant la revendication 1, caractérisé en ce que l'état d'un périphérique, relié directement ou indirectement au microprocesseur qui équipe le dispositif de contrôle des accès, peut indifféremment être de nature logique ou de nature analogique.

3 - Procédé de maintenance suivant l'une quelconque des revendications précédentes, caractérisé en ce qu'on utilise l'état d'un périphérique comme un indicateur de bon fonctionnement ou de disfonctionnement de ce périphérique, le tableau à double entrée des états des périphériques constituant alors une table des défauts qu'il est aisé de consulter pour la maintenance de l'installation.

4 - Procédé de maintenance suivant la revendication 3, caractérisé en ce que l'état d'un périphérique, tel que stocké dans la mémoire sauvegardée du dispositif de contrôle des accès à un bâtiment, indique, en cas de panne de ce périphérique, la nature de cette panne.

5 - Dispositif de contrôle des accès à un bâtiment, du type d'un portier de rue électronique équipé d'un microprocesseur (16) gérant notamment une mémoire sauvegardée (13) où sont stockés les noms des occupants dudit bâtiment, d'un afficheur (II) et d'un clavier alphanumérique (10) permettant à un visiteur de taper le nom de la personne demandée, ce nom étant comparé auxdits noms stockés, afin qu'en cas de coincidence du nom tapé et d'un nom stocké, un signal soit émis en direction d'un dispositif de communication (7) situé à l'intérieur de l'appartement de ladite personne demandée, dispositif caractérisé en qu'il met en oeuvre le procédé de maintenance conforme à l'une quelconque des revendications précédentes.

6 - Dispositif de contrôle des accès à un bâtiment suivant la revendication 5, caractérisé en ce qu'il comporte un ensemble de périphériques, ou circuits de dérivation (6), orientant les signaux émis par une unité centrale (1) vers des dispositifs de communication (7) dudit bâtiment, lesdits circuits de dérivation (6) étant, par exemple, des multiplexeurs informatiques (15) chargés de tester en permanence, ou à chaque appel, lesdits dispositifs de communication (7), et de déterminer, le cas échéant, la nature d'une panne affectant ces mêmes dispositifs (7).

7 - Dispositif de contrôle des accès à un bâtiment suivant la revendication 6, caractérisé en ce que chacun des multiplexeurs (15) comporte un circuit (26) de détection des défauts pouvant affectés les dispositifs de communication (7) auxquels ces multiplexeurs (15) sont reliés.

8 - Dispositif de contrôle des accès à un bâtiment suivant l'une quelconque des revendications 5 à 7, caractérisé en ce que l'adresse informatique d'un périphérique, relié directement ou indirectement à l'unité centrale (1), correspond directement à l'adresse informatique de l'emplacement réservé à l'état de ce périphérique dans la mémoire sauvegardée (13).

9 - Dispositif de contrôle des accès à un bâtiment suivant l'une quelconque des revendications 5 à 8, caractérisé en ce que l'unité centrale (1) provoque en permanence la mise à jour et la datation du tableau à double entrée, stocké dans la mémoire sauvegardée (13), et indiquant les états des périphériques reliés directement ou indirectement à l'unité centrale (1).

10 - Dispositif de contrôle des accès à un bâtiment suivant l'une quelconque des revendications 5 à 9, caractérisé en ce que les signaux de son - c'est-à-dire les signaux transitant entre le microphone (20) du poste de rue (2) et le haut-parleur du combiné téléphonique du dispositif de communication (7) d'un appartement d'une part, et entre le microphone du combiné téléphonique dudit dispositif de communication (7) et le haut-parleur (21) du poste de rue (2) d'autre part -, sont dissociés en deux demi-signaux complémentaires, référencés par rapport au fil de masse, et synchronisés temporellement de manière à éliminer les signaux parasites pouvant affectés l'intelligibilité desdits signaux de son.

*Fig 1*

Fig 2

_Fig 3_

Fig 4

EP 0 424 273 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D | FR-A-2620286 (ZANOUDA) <br> * page 2, ligne 15 - page 4, ligne 3 * | 1-5 | H04M11/02 |
| A | | 6-10 | |
| | --- | | |
| Y,D | DE-A-3643618 (SIEMENS) <br> * colonne 3, ligne 3 - colonne 4, ligne 8 * | 1-5 | |
| | --- | | |
| A,O | EP-A-208959 (BLAUPUNKT) <br> * page 10, ligne 5 - page 17 * | 1-10 | |
| | --- | | |
| A | EP-A-170559 (SIMARD) <br> * page 2, ligne 9 - page 4, ligne 1 * | 1-9 | |
| | ----- | | |

**DOMAINES TECHNIQUES RECHERCHES (Int. Cl.5)**

H04M
G08B

Le présent rapport a été établi pour toutes les revendications

| Lieu de la recherche | Date d'achèvement de la recherche | Examinateur |
|---|---|---|
| LA HAYE | 28 NOVEMBRE 1990 | MIKKELSEN C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P0402)